# EUROPEAN PATENT APPLICATION

(11) **EP 4 657 727 A1**
(43) Date of publication of application: **03.12.2025**
(21) Application number: 24178701.9
(22) Date of filing: 29.05.2024
(51) Int. Cl.: H02M 1/00, H02M 3/158

(54) **MULTI-PHASE-BUCK-POWER-CONVERTER**

(71) Applicant: Airbus Defence and Space GmbH, 82024 Taufkirchen (DE)
(72) Inventor: Strixner, Erich, 82024 Taufkirchen (DE)
(74) Representative: Frenkel, Matthias Alexander

(57) **Abstract**

The invention relates to a multi-phase-buck-power-converter. An embodiment of a multi-phase-buck-power-converter 100 comprises:
a first sub-circuit 200 that is configured to supply a first reference voltage; and
at least two buck-stages 500. Each buck-stage of the at least two buck-stages comprises:
a second sub-circuit 300 that is configured to provide an output current, wherein the second sub-circuit 300 comprises a second resistor 320 to which a second reference voltage can be applied as a function of the output current; and
a third sub-circuit 400 that is configured to compare the first reference voltage of the first sub-circuit to the second reference voltage of the second sub-circuit 300 and to correct the output current of the second sub-circuit 300 as a function of a difference between the first reference voltage and the second reference voltage.

The at least two buck-stages 500 are connected in parallel to each other.

The multi-phase-buck-power-converter further comprises a voltage control unit 60 configured to regulate an output voltage of the multi-phase-buck-power-converter 100.

## Description

The invention relates to a multi-phase-buck-power-converter.

Multi-phase-buck-power-converters are commonly used in the computing environment from laptops and tablets to servers and switches, for example to power Central Processing Units (CPUs), Field Programmable Gate Arrays (FPGAs) or peripheral components. In general, a buck-converter is a DC-to-DC (DC: direct current) converter that decreases voltage and increases current from the supply to the load. Synchronous Buck-converters typically contain at least two power-semiconductors (e.g. two transistors) and at least two energy storage elements (e.g. a capacitor and inductor) and belong to the class of switched-mode power supplies. They often operate with a pulse width modulation of a high and fixed switching frequency, hereinafter also referred to as Pulse Width Modulation frequency, of 100kHz - 2MHz. The pulse width modulation or in some cases the frequency modulation which is used for output voltage regulation allows only small delays in the modulator circuit to operate with high performance. The selection of high-speed-comparator Integrated Circuits (ICs) is mandatory in single-phase- and multi-phase-buck-power-converters to limit delays in the modulator. These ICs unfortunately often have high values of input offset voltage, input offset current and input bias current, which leads to an unequal share of load current between the buck-stages of multi-phase-buck-power-converters with identical buck-stages connected in parallel to each other.

The main disadvantages of the unequal load current share between the buck-stages are a reduced maximum output current and an unequal thermal power dissipation at the different buck-stages.

In view of the foregoing there is a demand for improved multi-phase-buck-power-converters, particularly a multi-phase-buck-power-converter with an improved load current sharing between the buck-stages.

To solve the above problem a multi-phase-buck-power-converter according to independent claim 1 is proposed.

According to an aspect of the invention a multi-phase-buck-power-converter is provided.

The multi-phase-buck-power-converter comprises a first sub-circuit. The first sub-circuit is configured to supply a first reference voltage. The multi-phase-buck-power-converter further comprises at least two buck-stages. Each of the at least two buck-stages comprises a second sub-circuit. The second sub-circuit of each of the at least two buck-stages is configured to provide an output current. The second sub-circuit of each of the at least two buck-stages comprises a second resistor. A second reference voltage can be applied to the second resistor as a function of the output current. Each of the at least two buck-stages further comprises a third sub-circuit. The third sub-circuit of each of the at least two buck-stages is configured to compare the first reference voltage of the first sub-circuit to the second reference voltage of the second sub-circuit of the respective buck-stage of the at least two buck-stages. The third sub-circuit is further configured to correct the output current of the second sub-circuit of the respective buck-stage of the at least two buck-stages as a function of a difference between the first reference voltage and the second reference voltage. The at least two buck-stages are connected in parallel to each other.

The multi-phase-buck-power-converter further comprises a voltage control unit. The voltage control unit is configured to correct or regulate an output voltage of the multi-phase-buck-power-converter. The voltage control unit is further configured to determine the value of the first reference voltage.

The first sub-circuit may comprise a first operational amplifier. The first operational amplifier may be or comprise a voltage feedback amplifier. A voltage feedback amplifier in general can be described as a voltage-controlled voltage source with high gain, low values of input offset voltage, input offset current and input bias current.

The first operational amplifier may serve as a precision proportional integral derivative (PID) controller or regulator to keep the first reference voltage of the first sub-circuit constant (and) independent of changes of the dc-output voltage.

The first sub-circuit may comprise at least a first group of resistors. The resistors of the first group of resistors are arranged as a balanced first Wheatstone measuring bridge. An input of the first operational amplifier may be interposed in a first bridge path of the first Wheatstone measuring bridge.

The first Wheatstone measuring bridge may serve as a voltage divider, converting the output voltage of the voltage control unit to the first reference voltage depending on the configuration of the first group of resistors of the first Wheatstone measuring bridge. The dividing factor of the first Wheatstone measuring bridge serving as a voltage divider may be 100, wherein the output voltage of the voltage control unit is 100 times higher than the first reference voltage.

The first reference voltage may be applied to a first resistor inside the first sub-circuit.

With the first bridge path of the balanced first Wheatstone measuring bridge as an input of the first operational amplifier, voltage deviations of the dc-output voltage can be compensated to transfer the voltage of the voltage control unit, wherein the first reference voltage may be reduced by a dividing factor of 100, for example.

The first reference voltage may be or lie between 0mV and 50mV, for example 20mV.

The first reference voltage serves as a reference value for the third sub-circuit of each of the at least two buck-stages, that compares the first reference voltage with the respective second reference voltage of the respective buck-stage of the at least two buck-stages. With a very low value of the first reference voltage, as for example 20mV, a very low value of the second reference voltage is needed in the second sub-circuit of each of the at least two buck-stages, causing less losses and therefore providing a very high efficiency of the current output of the respective second sub-circuit. In a balanced state where both values of the first and the second reference voltage are equal in magnitude, the respective second sub-circuit works in the desired state between zero and the highest current output.

The first group of resistors may comprise at least two resistors with a (relatively low) resistance of for example between 10Ω and 1000Ω, in particular 100Ω, and at least two resistors with a higher resistance of for example between 1000Ω and 50000Ω, in particular 9900Ω.

The second sub-circuit of each of the at least two buck-stages may comprise a first comparator circuit.

The first comparator circuit of the second sub-circuit of each of the at least two buck-stages may be a high-speed comparator with positive feedback.

As a main disadvantage a high-speed-comparator has high values of input offset voltage, input offset current and input bias current. These values may differ between the high-speed comparators used for at least 2 buck stages, even for identical part types, which may lead to an unequal current output when operating connected parallel to each other as in a multi-phase-buck-power-converter.

The second sub-circuit of each of the at least two buck-stages may comprise at least a second group of resistors. The resistors of the second group of resistors may be arranged as a balanced second Wheatstone measuring bridge. An input of the first comparator circuit may be interposed in a second bridge path of the second Wheatstone measuring bridge.

The second group of resistors may comprise at least two resistors with a low resistance of for example between 10Ω and 1000Ω, in particular 100Ω, and at least two resistors with a higher resistance of for example between 1000Ω and 50000Ω, in particular 9900Ω.

The second Wheatstone measuring bridge may serve as a voltage divider, converting the output voltage of the voltage control unit to the second reference voltage depending on the configuration of the second group of resistors. The diving factor of the second Wheatstone measuring bridge serving as a voltage divider may be 100, wherein in this case the output voltage of the voltage control unit is 100 times higher than the second reference voltage. The dividing factor of the second Wheatstone measuring bridge may be equal to the dividing factor of the first Wheatstone measuring bridge.

The second sub-circuit may further comprise a power stage configured to provide a pulse width modulation of the output current.

The power stage of each of the at least two buck stages may comprise a Flipflop. The Flipflop may be a D-Flipflop. The power stage may further comprise at least two semiconductor switches. The at least two semiconductor switches may be MOSFET semiconductor or GaN-Transistor switches. The power stage may further comprise a voltage source, that is configured to provide an operational input voltage for the PWM.

The third sub-circuit of each of the at least two buck-stages comprises a second operational amplifier. The second operational amplifier of each of the at least two buck-stages may be a high precision voltage feedback amplifier. A high precision voltage feedback amplifier in general can be described as a voltage-controlled voltage source with high open loop gain, very low values of input offset voltage, input offset current and input bias current.

The voltage control unit may be or comprise a proportional integral derivative (PID)-Type-Error Amplifier. The voltage control unit may further comprise a voltage source. The voltage control unit may be further configured to control a direct current (DC) component of the output current.

The output current of the second sub-circuit of each of the at least two buck-stages may be between 0A and 300A, for example 50A.

The first reference voltage may be between 0mV and 50mV, for example 20mV.

The multi-phase-buck-converter may further comprise an output capacitor. The output capacitor may be connected in parallel to the load. The output capacitor may be used to filter out the alternating current (AC) component of the output current so that a constant voltage is applied to the load.

The main advantage of the solution according to the invention as described above is that the output current of each of the individual buck-stages is nearly the same.

This may result in further advantages such as:
- higher maximum output current of the multi-phase-buck-power-converter in total, due to the fact that all buck-stages can operate close to their current limit, and/or
- equal thermal heating and power loss of all buck-stages, and/or
- smaller hardware and components due to the fact that no additional margins are needed by limited load current sharing, and/or
- less dissipation in a shunt resistor (e.g. first and/or second resistor) due to a smaller voltage drop at maximum load current, and/or
- smaller footprint of hardware and reduced costs.

In order to describe the manner in which the above-recited and other advantages and features can be obtained, a more particular description of the subject matter briefly described above will be rendered by reference to specific embodiments which are illustrated in the appended drawings. Understanding that these drawings depict only typical embodiments and are not therefore to be considered to be limiting in scope, embodiments will be described and explained with additional specificity and detail through the use of the accompanying drawings in which:
**Fig. 1** illustrates an embodiment of a multi-phase-buck-power-converter with two buck stages,
**Fig. 2** illustrates an embodiment of the first sub-circuit as illustrated in Fig.1,
**Fig. 3** illustrates an embodiment of the second sub-circuit as illustrated in Fig.1,
**Fig. 4** illustrates an embodiment of the third sub-circuit as illustrated in Fig.1,
**Fig. 5** illustrates a detailed embodiment of a multi-phase-buck-power-converter and the output current flow.
**Fig. 6** illustrates a detailed embodiment of a voltage control unit.

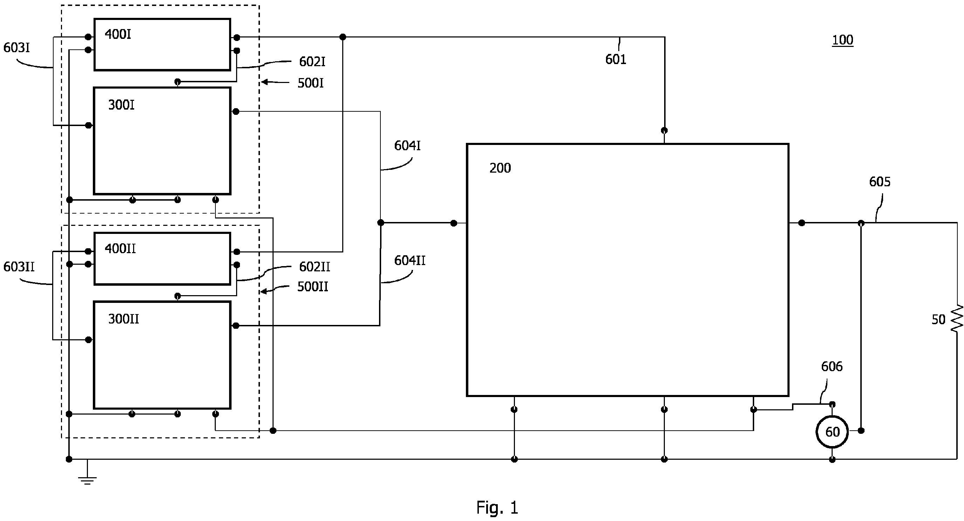

**Fig.1** shows a multi-phase-buck-power-converter 100 as it can be used in the computing environment to power a load 50. For the sake of simplicity, a resistor is shown as an example of the load 50. The load 50 can be for example a CPU, FPGA, General Processing Unit (GPU) or any other electrical consumer but is not limited to the computing environment.

The multi-phase-buck-power-converter 100 has a first sub-circuit 200, a first buck-stage 500I, a second buck-stage 500II and a voltage control unit 60. The first buck-stage 500I and the second buck-stage 500II are connected in parallel to each other.

Each of the buck-stages, the first buck-stage 5001 and the second buck-stage 500II as shown in Fig.1 by way of example, has a second sub-circuit 300I/300II and a third sub-circuit 400I/400II.

The first buck stage 500I comprises a second sub-circuit 300I and a third sub-circuit 400I associated to the second sub-circuit 300I and the second buck stage 500II comprises a second sub-circuit 300II and third sub-circuit 400II associated to the second sub-circuit 300II. The first 500I and the second buck-stage 500II are identical in their structure.

The first sub-circuit 200 is connectable with each of the third sub-circuits 400I/400II and is also connected, in the exemplary embodiment shown in Fig.1, via a first line 601. The first sub-circuit 200 is connectable with each of the second sub-circuits 300I/300II and is also connected, in the exemplary embodiment shown in Fig.1, via a fourth line 604I/604II. The first sub-circuit 200 is connectable with a load 50 and is, in the exemplary embodiment shown in Fig.1, also connected thereto via a fifth line 605. The first sub-circuit 200 is connectable with the voltage control unit 60 and is, in the exemplary embodiment shown in Fig.1, also connected thereto via a sixth line 606.

The respective second sub-circuits 300I/300II are connectable with the voltage control unit 60 and are, in the exemplary embodiment shown in Fig.1, also connected thereto via the sixth line 606.

The respective third sub-circuits 400I/400II are connectable with the respective associated second sub-circuits 300I/300II and are, in the exemplary embodiment shown in Fig.1, also connected thereto via the second lines 602I and 602II.

The respective third sub-circuits 400I/400II are further connectable with the respective associated second sub-circuits 300I/300II and are, in the exemplary embodiment shown in Fig.1, also connected thereto via the third lines 6031 and 603II.

The first sub-circuit 200 is configured to provide a first reference voltage to the respective third sub-circuits 400I/400II via the first line 601.

The respective second sub-circuits 300I/300II are configured to provide an output current via the fourth lines 604I and 604II to the first sub-circuit 200. The output current of the each of the second sub-circuits 300I/300II passes through the first sub-circuit 200 to the load 50. The respective second sub-circuits 300I/300II are further configured to provide a second reference voltage to the respective associated third sub-circuit via the second lines 602I and 602II.

The respective third sub-circuits 400I/400II are configured to compare the first reference voltage to the respective associated second reference voltages and, in case of a difference between the first reference voltage and the respective second reference voltage, to supply a correction voltage to the respective associated second sub-circuits 300I/300II via the third lines 603I and 603II in order to correct the output currents and therefore the respective second reference voltage of the associated second sub-circuits 300I/300II.

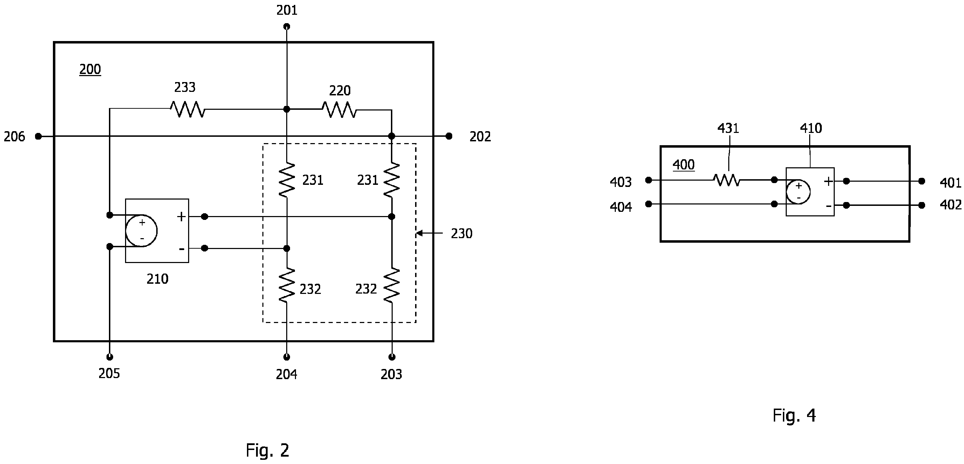

The following descriptions of Fig.2 to Fig.4 will include a detailed discussion of the functioning of each of the sub-circuits.

A possible realization of the first sub-circuit 200 will now be described with reference to **Fig. 2****.**

The first sub-circuit 200, as shown in the exemplary embodiment of Fig.2, has a first operational amplifier 210. The first operational amplifier 210 is for example configured or embodied as a voltage feedback amplifier. A voltage feedback amplifier can be described as a voltage-controlled voltage source.

The first sub-circuit 200 further has a first Wheatstone measuring bridge 230 and a first resistor 220. An input of the first operational amplifier is interposed in the first bridge path of the first Wheatstone measuring bridge 230. The first Wheatstone measuring bride 230 has a first group of resistors which consists of two identical resistors 231 and two identical resistors 232. The first group of resistors is arranged to form a balanced first Wheatstone measuring bridge 230.

The first resistor 220 is arranged on top of the first Wheatstone measuring bridge 230, in other words, each of the two ends of the first resistor 220 is connected with one of the identical resistors 231 and is not interposed in the first bridge path. The first resistor 220 is further connected with a coupling resistor 233 on the one side as an output of the first operational amplifier 210.

The first reference voltage is applied to the first resistor 220.

The first sub-circuit 200, as shown by way of example in the exemplary embodiment shown in Fig.2, has six connectors 201-206. The first sub-circuit 200 is connected with the respective third sub-circuits 400I/400II via connector 201 to supply the first reference voltage to each of the third sub-circuits 400I/400II. Connector 201 is connected between the first resistor 220 and the coupling resistor 233 inside the first sub-circuit 200.

The first sub-circuit 200 is connected with each of the second sub-circuits 300I/300II via connector 206 and with the load 50 via connector 202. The output current of the second sub-circuits 300I/300II enters the first sub-circuit 200 via connector 206 and passes through the first sub-circuit 200 directly to the load 50 via connector 202. Inside the first sub-circuit 200, connectors 202 and 206 are each connected to the one side of the first resistor 220 that is not connected to the coupling resistor 233.

The first sub-circuit 200 is connected with the ground level via connectors 204 and 205. Connector 205 connects the output of the first operational amplifier 210 to the ground level and connector 204 the one side of the first Wheatstone measuring bridge 230. Connector 204 is connected to the one resistor 232, that is on the same side of the first Wheatstone measuring bridge as the connection of the first resistor 220 and the coupling resistor 233. Connector 204 is not connected in the bridge path of the first Wheatstone measuring bridge.

The first sub-circuit 200 is connected with the voltage control unit 60 via connector 203. Connector 203 is connected to the one resistor 232, that is on the opposite side of the first Wheatstone measuring bridge as the connection of the first resistor 220 and the coupling resistor 233.

The voltage control unit 60 is configured to supply a control voltage, that is used to determine the first reference voltage at the first resistor 220. The first Wheatstone measuring bridge 230 works as a voltage divider for the control voltage. In this exemplary embodiment, the voltage control unit 60 supplies a control voltage of 2.5V. The resistors 231 have a value of 100Ω and the resistors 232 have a value of 9900Ω. As a result, a voltage of 25mV is applied to the resistor 220. This reduced voltage is the necessary value of the first reference voltage to be applied to the first resistor 220 required to balance the first Wheatstone measuring bridge 230. The first operational amplifier 210, built as a PID regulator, constantly keeps the first Wheatstone measuring bridge 230 in a balanced state, by constantly applying the first reference voltage (25 mV as in this exemplary embodiment) to the first resistor 220.

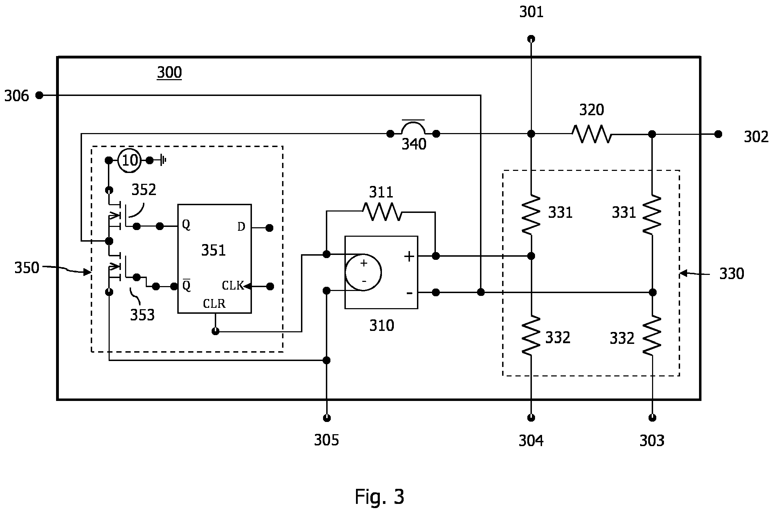

A possible realization of the second sub-circuit, referenced as 300 in the following, will now be described with reference to **Fig.3****.**

The second sub-circuit 300, as shown in the exemplary embodiment of Fig.3, has a first comparator circuit 310. The first comparator circuit 310 is for example a high-speed comparator. A comparator in general can be described as a specialized high-gain differential amplifier that compares two voltages and outputs a digital signal.

The high-speed comparator is able to compare the different input voltages in a short time interval of, for example, 3ns.

As a main disadvantage a high-speed-comparator has high values of input offset voltage, input offset current and input bias current. These values differ even for structural identical high-speed-comparators, which leads to an unequal load current output when operating connected parallel to each other as in a multi-phase-buck-power-converter 100.

The first comparator circuit 310 has a resistor 311 which feeds back the output of the high-speed-comparator to the non-inverted input in order to prevent the high-speed-comparator from oscillating.

The second sub-circuit 300 further has a power stage 350, configured to provide a Pulse Width Modulation (PWM) of the output current. The power stage 350 in this exemplary embodiment has a D-Flipflop 351 and two MOSFET or GaN-Transistor semiconductor switches 352/353. The Clear (CLR) input of the D-Flipflop 351 is connected to the output of the high-speed-comparator. The Clock (CLK) input port represents the input for a Clock Signal, which is not explicitly shown in this context. The D input port (D) represents the input for a supply voltage, which is not explicitly shown in this context. The non-inverted output (Q) of the D-Flipflop 351 is connected to the Gate port of the first semiconductor switch 352 and the inverted output (*Q̅*) of the D-Flipflop 351 is connected to the Gate port of the second semiconductor switch 353. As it is the principal of operation the high side drive of the semiconductor switches 352/352 is not depicted.

The power stage 350 further has a voltage source 10, that is configured to provide an operational input voltage for the PWM. The voltage source 10 can be the identical voltage source 10 for any of the at least two buck stages 500I/500II. The Drain port of the first semiconductor switch 352 is connected to the voltage source 10 and the Source port of the first semiconductor switch 352 is connected to the Drain port of the second semiconductor switch 353 and to the inductor 340. The Source port of the second semiconductor switch 353 is connected to the ground.

The second sub-circuit 300 further has a second Wheatstone measuring bridge 330 and a second resistor 320. An input of the first comparator circuit 310 is interposed in a second bridge path of the second Wheatstone measuring bridge 330.

The second Wheatstone measuring bride 330 has a second group of resistors which includes or, in the present example, consists of two identical resistors 331 and two identical resistors 332. The second group of resistors is arranged to form a balanced second Wheatstone measuring bridge 330.

The second resistor 320 is arranged on top of the second Wheatstone measuring bridge 330, in other words, each of the two ends of the second resistor 320 is connected to one of the identical resistors 331 and is not interposed in the second bridge path. The second resistor 320 is further connected to an inductor 340 on the one side.

The second reference voltage as a function of the output current defined by the first comparator circuit 310 is applied to the second resistor 320.

The output current defined by the first comparator circuit 310 passes directly through the second resistor 320 and therefore causes a voltage drop, the second reference voltage, at the second resistor 320. A high value of the second resistor 320 would thus cause a high second reference voltage and this would lead to a high voltage loss at the load 50 and thus a loss in efficiency of the buck-stage.

The second sub-circuit, as shown by way of example in the exemplary embodiment shown in Fig.3, has six connectors 301-306.

The second sub-circuit 300 is connected to the associated third sub-circuit 400 via connector 301 to supply the second reference voltage to the associated third sub-circuit 400. Connector 301 is connected between the second resistor 320 and the inductor 340 inside the second sub-circuit 300.

The second sub-circuit 300 is connected to the first sub-circuit 200 and thus to the load 50 via connector 302. The output current of the second sub-circuit 300 passes through the first sub-circuit 200 directly to the load 50. Inside the second sub-circuit 300, connector 302 is connected to the one side of the second resistor 320 that is not connected with the inductor 340.

The second sub-circuit 300 is connected to ground level via connectors 304 and 305. Connector 305 connects the output side of the first comparator circuit 310 and the power station 350 to ground level and connector 304 the one side of the second Wheatstone measuring bridge 330.

Connector 304 is connected to the one resistor 332, that is on the same side of the second Wheatstone measuring bridge as the connection of the second resistor 320 with the inductor 340. Connector 304 is not connected in the bridge path of the second Wheatstone measuring bridge 330.

The second sub-circuit 300 is connected to the voltage control unit 60 via connector 303. Connector 303 is connected to the one resistor 332, that is on the opposite side of the second Wheatstone measuring bridge 330 as the connection of the second resistor 320 with the inductor 340. Connector 303 is not connected in the bridge path of the second Wheatstone measuring bridge 330.

The second sub-circuit 300 is connected to the associated third sub-circuit 400 via connector 306 to receive the correction voltage in order to correct the output current. Connector 306 is connected to the one input of the first comparator circuit 310 in the bridge path of the second Wheatstone measuring bridge 330 on the same side of the second Wheatstone measuring bridge as connector 303.

As described above and with reference to Fig.1, the third sub-circuit 400 compares the first reference voltage to the respective associated second reference voltage and corrects the output current of the respective associated second sub-circuit 300 in case of a difference between the first and the second reference voltage. In a desired state, wherein the values of the first and the second reference voltages are equal in magnitude, the second sub-circuit 300 provides the desired output current.

The functioning of the second sub-circuit 300 generating the output current is explained in detail in the following description:
The voltage control unit 60 provides a control voltage to the connector 303 of the second sub-circuit 300. Similar to the first sub-circuit 200 as described in the exemplary embodiment of Fig. 2, the second Wheatstone measuring bridge 330 serves as a voltage divider, reducing the control voltage to the desired level of the second reference voltage. Voltage deviations of the DC output voltage can be compensated to transfer the voltage of the voltage control unit 60 to the first reference voltage without interference.

This reduced voltage is applied to the resistor 331 of the second Wheatstone measuring bridge 330, determining the necessary value of the second reference voltage applied on the second resistor 320 required to balance the second Wheatstone measuring bridge 330. The difference between the functioning of the second sub-circuit 300 and the first sub-circuit 200 is that the first operational amplifier 210 constantly applies the first reference voltage to the first resistor 220, which keeps the first Wheatstone measuring bridge 230 in a balanced state. In contrast, the second reference voltage is dependent in the current flow through the second resistor. The following description will provide a detailed explanation of the principle of current flow through the second resistor 320.

The first and second reference voltages must be equal in magnitude for the desired current output. To achieve this, the dividing factor of the first 230 and the second 330 Wheatstone measuring bridge must be identical. In this exemplary embodiment, as also shown in Fig. 2, the dividing factor of the first 230 and the second 330 Wheatstone measuring bridge is 100.

The first comparator circuit 310 built by a high-speed-comparator is configured to switch off the output signal in case that both inputs are on the same potential, i.e. the second Wheatstone measuring bridge 330 is balanced and the output current has reached the desired value.

The D-Flipflop 351 is configured as a clock edge-controlled D-Flipflop 351. The D-Flipflop 351 receives a clock signal on the clock (CLK) input port that controls the output of the D-Flipflop 351 and has a certain phase for each of the at least two buck stages 500I/500II.

A reset circuit for the D-Flipflop 351 to start with a well-defined state of the inverting (*Q̅*) and non-inverting outputs (Q) is not detailed here. The dead time between the semiconductor switches 352 and 353 needed to avoid cross conduction in the second Wheatstone measuring bridge 330 is not detailed here.

If there is no current flowing through the second resistor 320, and thus the second Wheatstone measuring 330 bridge is not balanced, the first comparator circuit 310 sends a low output signal to the D-Flipflop 351.

Without a clock signal on the D-Flipflop's 351 clock input port (CLK), no output signal is applied to the non-inverted output of the D-Flipflop 351, that is connected to the first semiconductor switch 352. However, an output signal is applied to the inverted output of the D-Flipflop 351, that is connected to the second semiconductor switch 353, causing the second semiconductor switch 353 to switch in a conductive state. With the first semiconductor switch 352 in a non-conductive and the second semiconductor switch 353 in a conductive state, the entire operational input voltage provided by the input voltage source 10 is applied to the first semiconductor switch 352 and the inductor 340 is set to ground potential. Thus, when no clock signal is received on the clock input port of the D-Flipflop 352, no operational input voltage is applied to the inductor 340 and consequently no current is flowing through the buck-stage 500.

If there is no current flowing through the second resistor 320, but a clock signal is received at the clock input port of D-Flipflop 351, an output is applied to the non-inverted output and thus applied to the first semiconductor switch 352. This switches the first semiconductor switch 352 into a conductive state, while the second semiconductor switch 353 is in a non-conductive state. When the first semiconductor switch 352 is in a conductive state, the entire operational input voltage supplied by the input voltage source 10 is applied to the inductor 340, the second resistor 320, and to the load 50 connected to the multi-phase-buck-power-converter 100. The current flowing through the inductor 340, and subsequently through the second resistor 340 and the load 50, builds up over time and does not increase abruptly like the applied operational input voltage, due to the functioning of the inductor 340. The current flowing through the second resistor 320 and therefore the voltage drop on the second resistor 320 (the second reference voltage) builds up over time until the voltage drop on the second resistor 320 reaches the desired value, at which point the Wheatstone measuring bridge 330 is in a balanced state. This causes the first comparator circuit 310 to apply a short high voltage pulse to the Clear (CLR) input of the D-Flipflop 351. When a short high voltage pulse is applied to the Clear (CLR) input of the D-Flipflop 351, no output signal is applied to the non-inverted output of the D-flipflop 351, but to the inverted output. This leads the second semiconductor switch 353 to be in a conductive and the first semiconductor switch 352 to be in a non-conductive state. As a result, the entire input operational voltage is applied to the first semiconductor switch 352 and the inductor 340 is set to ground potential.

The inductor 340 exhibits an energy storage effect, causing the current flow to decrease over time instead of abruptly stopping when no operational input voltage is applied. This results in a current curve that resembles a triangle wave form superimposed with a dc-current. The current decrease causes the second Wheatstone measuring bridge 330 to become unbalanced, leading to the first comparator circuit 310 providing a low input signal to the D-Flipflop 351. Upon receiving a new clock signal on the clock (CLK) input of the D-Flipflop 351, the output signal is again applied to the non-inverted output (Q) of the D-Flipflop 351, causing the current flow to increase again.

The output current of the second sub-circuit comprises of a DC and an AC component due to the delta current curve. The DC component is determined by the applied control voltage of the voltage control unit 60, which sets the required second reference voltage for the second Wheatstone measuring bridge 330 to be in a balanced state.

The first comparator circuits 310 of each of the at least two buck stages 500I/500II, built by a high-speed comparator, often have high values of input offset voltage, input offset current and input bias current as described above. This causes the first comparator circuits 310 to apply a short high voltage pulse to the Clear (CLR) input of the D-Flipflop 351 before the second Wheatstone measuring bridge 330 reaches the balanced state. As a result, the second reference voltage and consequently the output current does not reach the desired value. To correct the influence of the high values of input offset voltage, input offset current and input bias current of the first comparator circuit 310, the third sub-circuit 400 compares the second reference voltage to the high-precision first reference voltage and provides a correction voltage to the input of the first comparator circuits 310.

A possible realization of the third sub-circuit, referenced as 400 in the following, will now be described with reference to **Fig. 4****.**

The third sub-circuit 400, as shown in the exemplary embodiment of Fig. 4, has a second operational amplifier 410. The second operational amplifier 410 is for example a high precision voltage feedback amplifier. The high precision voltage feedback amplifier in general can be described as a voltage-controlled voltage source, with very low values of input voltage offset, input current offset and input current bias.

The third sub-circuit 400, as shown by way of example in the exemplary embodiment shown in Fig.4, has four connectors 401-404.

The third sub-circuit 400 is connected with the first sub-circuit 200 via connector 401 to receive the first reference voltage from the first sub-circuit 200.

The third sub-circuit 400 is connected with the associated second sub-circuit 300 via connector 402, to receive the second reference voltage from the associated second sub-circuit 300.

The input side of the second operational amplifier 410 is interposed between the connectors 401 and 402.

The third sub-circuit 400 is connected to the ground level via connector 404.

The third sub-circuit 400 is connected to the associated second sub-circuit 300 via connector 403 to provide a correction voltage as a deviation of the first reference voltage and the second reference voltage, for the second sub-circuit 300 and thus correct the current output of the second sub-circuit 300, as explained in the corresponding description of Fig.3.

The third sub-circuit 400 further has a third resistor 431, that is interposed between the output side of the second operational amplifier and connector 403. The third resistor 431 serves as a voltage divider, in order to adjust the correction voltage, as the deviation of the first reference voltage and the second reference voltage, to a voltage level processable by the first comparator circuit-310.

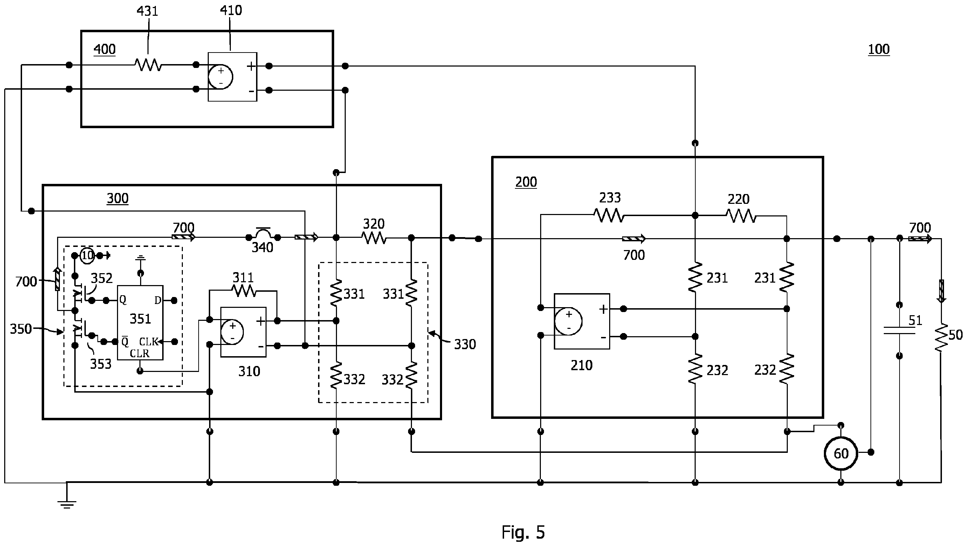

**Fig. 5****.** shows a detailed exemplary embodiment of a multi-phase-buck-power-converter 100 comprising a first 200, a second 300 and a third 400 sub-circuit configured in a way as shown by way of example in the exemplary embodiments shown in Fig. 2 to Fig. 4. Fig. 5 further illustrates the output current flow path. To improve the visibility only one buck stage 500 comprising one second sub-circuit 300 and one third sub-circuit 400 is shown in Fig. 5. Although only one buck-stage 500 is shown in Fig. 5 the multi-phase-buck-power-converter 100 may comprise at least two buck stages 500.

Fig 5. shows the output current flow, marked by the hatched wide arrows 700 along the lines. The power stage 350 controls the PWM of the output current and therefore the operational input voltage applied to the inductor 340. If a clock signal is received at the clock (CLK) input of the D-Flipflop 351 and the first semiconductor switch is in a conductive state, the output current builds up over time due to the inductor 340 and passes through the inductor 340. The output current further passes the second resistor 320 and therefore leads to a voltage drop, the second reference voltage, at the second resistor 320. Leaving the second sub-circuit 300 the output current passes through the first sub-circuit 200 directly to the load 50.

The multi-phase-buck-power-converter further has an output capacitor 51 that is connected in parallel to the load 50. This output capacitor 51 serves to filter the AC component of the output current, ensuring a constant output voltage is supplied to the load 50.

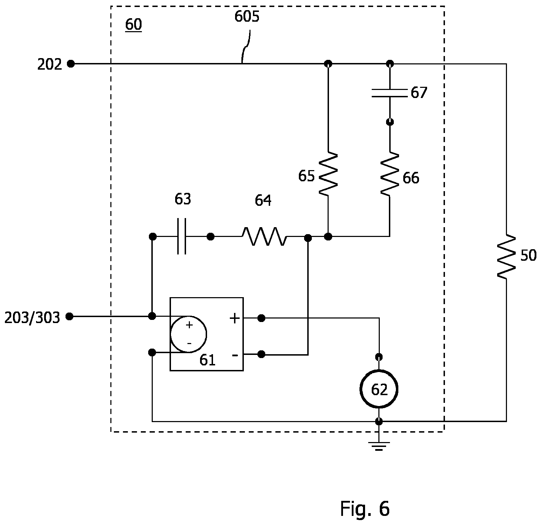

**Fig. 6** illustrates a detailed exemplary embodiment of the voltage control unit 60, which is configured as a PID regulator to supply a control voltage for the first sub-circuit, determining the first reference voltage, and the respective second-sub-circuits, determining the DC component of the output current. The voltage control unit 60 has a high-speed operational amplifier 61 and a voltage source 62.

The non-inverted input of the high-speed operational amplifier 61 is connected to the output of the voltage source 62, while the inverted input is connected to the transmission line 605 through the resistors 65 and 66 and the capacitor 67. The output of the high-speed operational amplifier is connected to the connectors 203 and 303 of the first and second sub-circuits and is fed back to its inverted input through the resistor 64 and the capacitor 63.

The resistor 64 and the capacitor 63 are connected in series. The resistor 66 and capacitor 67 are connected in series, with resistor 65 connected in parallel to both. This configuration represents a standard PID regulator structure, with an integral, differential and proportional components defined by the resistors and capacitors employed.

The control voltage, which is the output voltage of the high-speed operational amplifier 61, determines the value of the first reference voltage and thus also the level of the output current. The details of this process are described in the corresponding descriptions of Fig. 2 and Fig. 3. This output voltage of the high-speed operational amplifier 61 is a function of input voltage supplied by the voltage source 61.

## Claims

1. A multi-phase-buck-power-converter (100) comprising:
i) a first sub-circuit (200) that is configured to supply a first reference voltage;
ii) at least two buck-stages (500), wherein each of the at least two buck-stages comprises:
a second sub-circuit (300) that is configured to provide an output current, wherein the second sub-circuit (300) comprises a second resistor (320) to which a second reference voltage can be applied as a function of the output current;
a third sub-circuit (400) that is configured to compare the first reference voltage of the first sub-circuit to the second reference voltage of the second sub-circuit (300) and to correct the output current of the second sub-circuit (300) as a function of a difference between the first reference voltage and the second reference voltage;
wherein the at least two buck-stages (500) are connected in parallel to each other;
iii) a voltage control unit (60) configured to regulate an output voltage of the multi-phase-buck-power-converter (100) and to determine a value of the first reference voltage.

2. The multi-phase-buck-power-converter (100) according to claim 1, wherein the first sub-circuit comprises (200) a first operational amplifier (210).

3. The multi-phase-buck-power-converter (100) according to claim 2, wherein the first operational amplifier (210) is a voltage feedback amplifier.

4. The multi-phase-buck-power-converter (100) according to claim 3, wherein the first sub-circuit (200) comprises at least a first group of resistors that are arranged as a balanced first Wheatstone measuring bridge (230), wherein an input of the first operational amplifier (210) is interposed in a first bridge path of the first Wheatstone measuring bridge (230).

5. The multi-phase-buck-power-converter (100) according to claim 4, wherein the first group of resistors comprises at least two resistors (231) with a resistance between 10Ω and 1000Ω, for example 100Ω, and at least two resistors (232) with a resistance between 1000Ω and 50000Ω, for example 9900Ω.

6. The multi-phase-buck-power-converter (100) according to any of the previous claims, wherein the second sub-circuit (300) of each of the at least two buck-stages (500) comprises a first comparator circuit (310).

7. The multi-phase-buck-power-converter (100) according to claim 6, wherein the first comparator circuit (310) is a high-speed comparator.

8. The multi-phase-buck-power-converter (100) according to claim 7, wherein the second sub-circuit (300) of each of the at least two buck-stages (500) comprises at least a second group of resistors that are arranged as a balanced second Wheatstone measuring bridge (330), wherein an input of the first comparator circuit (310) is interposed in a second bridge path of the second Wheatstone measuring bridge (330).

9. The multi-phase-buck-power-converter (100) according to claim 8, wherein the second group of resistors comprises at least two resistors (331) with a resistance between 10Ω and 1000Ω, for example 100Ω, and at least two resistors (332) with a resistance between 1000Ω and 50000Ω, for example 9900Ω.

10. The multi-phase-buck-power-converter (100) according to any of the previous claims, wherein the second sub-circuit (300) of each of the at least two buck stages (500) comprises a power stage (350) configured to provide a pulse width modulation (PWM) of the output current.

11. The multi-phase-buck-power-converter (100) according to claim 10, wherein the power stage (350) comprises a Flipflop (351).

12. The multi-phase-buck-power-converter (100) according to claim 10 or 11, wherein the power stage (350) comprises at least two semiconductor switches (352/353).

13. The multi-phase-buck-power-converter (100) according to any of the previous claims, wherein each of the third sub-circuits (400) comprises a second operational amplifier (410).

14. The multi-phase-buck-power-converter (100) according to claim 10, wherein the second operational amplifier (410) is a high precision voltage feedback amplifier.

15. The multi-phase-buck-power-converter (100) according to any of the previous claims, wherein the voltage control unit (60) comprises a proportional integral derivative (PID) error amplifier.

16. The multi-phase-buck-power-converter (100) according to any of the previous claims, wherein the output current of the second sub-circuit (300) of each of the at least two buck-stages is between 0A and 300A, for example 50A.

17. The multi-phase-buck-power-converter (100) according to any of the previous claims, wherein the first reference voltage is between 0mV and 50mV, for example 20mV.

18. The multi-phase-buck-power-converter (100) according to any of the previous claims, the multi-buck-power converter (100) further comprising an output capacitor (51).
